# EUROPEAN PATENT SPECIFICATION

(11) **EP 0 713 081 B1**
(45) Date of publication and mention of the grant of the patent: **17.04.2002**
(21) Application number: 95114220.7
(22) Date of filing: 11.09.1995
(51) Int. Cl.: G01F 11/08

(54) **Apparatus for the controlled supply of products, for example foodstuffs**
Gerät zur kontrollierten Abgabe von Produkten, wie zum Beispiel Nahrungsmitteln
Dispositif pour la distribution des produits, par exemple des aliments

(30) Priority: 18.11.1994 CH 348694
(43) Date of publication of application: 22.05.1996
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Pedrotto, Gianfranco, I-12050 Neviglie (Cuneo) (IT)
(74) Representative: Rambelli, Paolo

(56) References cited:
- EP-A- 0 105 771
- EP-A- 0 201 389
- EP-A- 0 447 616
- FR-A- 2 518 505

## Description

The present invention relates to apparatus for the controlled supply of products.

The invention has been developed with particular concern for its possible use for the controlled supply of foodstuffs, such as masses of creamy food products. Typical examples of substances of this type are, for example, chocolate cream, whipped cream (or substantially similar creams), mayonnaise, foamed products, etc. Very often one is concerned with aerated masses, that is, masses which contain greater or lesser quantities of gases trapped within them (usually air although obviously the term "aerated" should not be understood as limited strictly to the presence of air).

Apparatus for delivering metered supplies of aerated substances such as foams is described for example in European Patent Application EP-A-0539646. In this prior art document the problem specifically faced is that of delivering very small metered quantities of aerated substances, such as, indeed, foamed products. One is concerned in this case with an aerated substance having a very low specific gravity and marked characteristics of elastic compressibility due to the mass of trapped gas. In the prior-art document in question, in which particular emphasis is placed on the problem of precision metering given the very small quantity of foam handled at any one time, it has already been made clear that it is necessary to handle aerated substances, so to speak, delicately, without the application of mechanical stresses or pressures which could damage the mass, for example by making it "fall".

More specifically, the present invention relates to apparatus according to the preamble of claim 1, which is known, e.g. from EP-A-0 447 616. Substantially similar arrangements are known, e.g. from EP-A-0 201 389, EP-A-0 105 771 and FR-A-2 518 505.

The present invention, the field of application of which is not, however, limited solely to the food product sector, takes its starting point from the need to satisfy several concurrent and complementary requirements in addition to the requirements which are at the root of the solutions described in EP-A-0539646 and the other prior art documents cited therein. This is true particularly with regard to the need to supply relatively large quantities of substances very quickly (which requirement is particularly critical in modern plants for the manufacture of food products which operate at very high rates) and the need to produce apparatus which can be cleaned easily and, if necessary, sterilised, and the need to prevent any stagnation of masses of the substances delivered.

The object of the present invention is to achieve solutions which are able to satisfy even these further requirements in an excellent manner.

According to the present invention, this object is achieved by apparatus having the characteristics claimed specifically in Claim 1. Advantageous developments of the invention form the subjects of the subclaims.

In summary, the present invention provides for the product to be delivered to be fed into a plurality of straight tubes with a flexible wall. This wall is then squashed, with the subsequent translational movement of the squashed zone along the length of the tube. The translational movement of the squashed zone causes a force to be exerted on the substance in the tube with its resultant delivery from the tube itself.

The invention may thus be considered as operating on the principle of so-called peristaltic pumps. Such pumps are generally available commercially for various uses (usually for pumping liquids, including biological liquids in blood purification systems, etc) and include a tube into which the liquid intended to be pumped is fed. The tube is arranged in an arcuate path, typically circular, within a cylindrical stator. A lobed rotor is mounted in the cylindrical stator and its rotation causes the ordered squashing of the wall of the flexible tube and the consequent pumping action.

Experiments carried out by the Applicant have, however, shown that the use of conventional peristaltic pumps in the preferred field of application of the present invention (supply of food products which may be aerated) gives rise to considerable operational problems such as the blocking of the pump lines and damage to the products pumped. The reasons for this unsatisfactory behaviour are not at all clear: it must, however, be assumed that the problem with conventional peristaltic pumps is that they apply mechanical stresses and pressures to the substance pumped which are in fact incompatible with the handling of substances with a degree of viscosity (for example creams) and/or aerated substances of the type described in the introduction to the present invention, despite the fact that they can be withstood without serious disadvantages by a mass with little viscosity and/or masses which are substantially incompressible, such as liquids.

The invention will now be described purely by way of non-limitative example with reference to the appended drawings, in which:
Figure 1 illustrates the basic principle of operation of apparatus according to the invention,
Figure 2 illustrates one embodiment of the solution of the invention, and
Figure 3 illustrates schematically the internal structure of one of the elements illustrated in Figure 2.

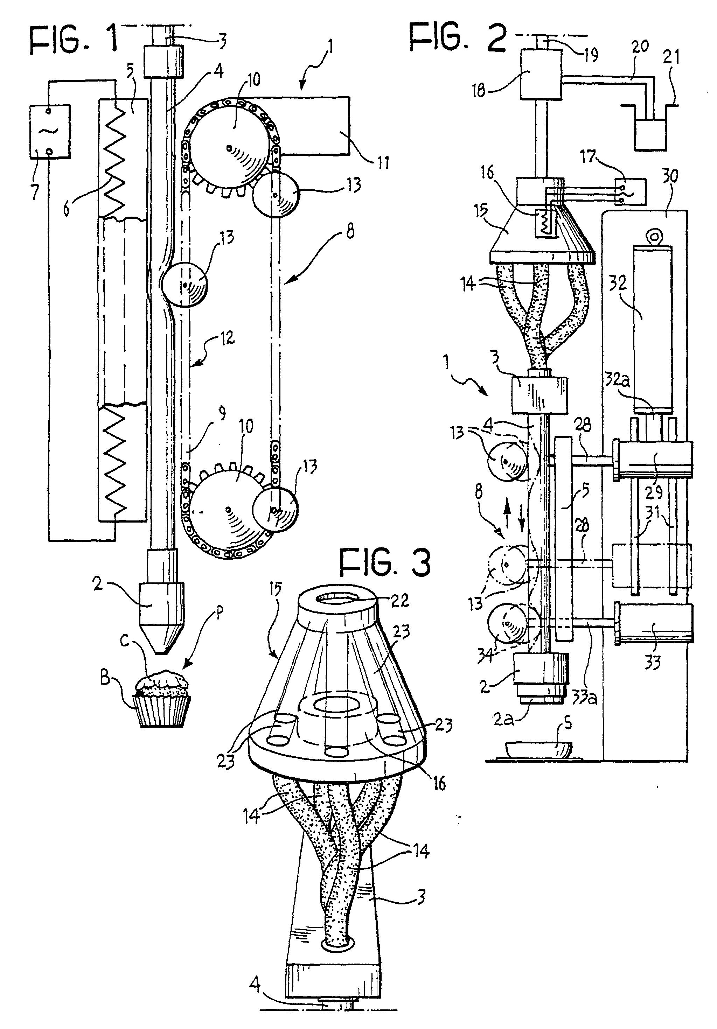

The delivery apparatus generally indicated 1 in Figure 1 is intended to be used, for example, for the controlled delivery of a food product such as, for example, chocolate cream or a like cream.

As is well known to experts in the field, the correct handling of chocolate imposes very stringent requirements such as, for example, the need to keep the mass at a strictly controlled temperature in order to avoid harmful phenomena (separation of butter, etc) and, above all, to enable the mass of chocolate to be cooled properly by the process generally known as "tempering".

By way of example, the delivery apparatus of the invention may be used to form decorations constituted by lines of chocolate deposited on products such as, for example, spherical pralines P in respective paper cups B with a top coating C.

For example, one may be dealing with products such as those indicated in EP-A-0554707 where the possibility of forming the coating C by spraying is illustrated. Naturally, one is considering purely an example, in that - as already specified - the invention lends itself to numerous other applications, even outside the food sector.

In the following, the various element shown in Figure 1 (which, as indicated shows the basic principle of operation of the invention) will be described first. Thereafter one embodiment of the invention proper will be described with reference to Figure 2.

In the case illustrated in Figure 1 by way of example, the creamy mass (for example chocolate) which is metered is deposited in the form of decorative lines from a nozzle 2 (of known type) located at the lower end of the delivery apparatus 1. The apparatus 1 receives the mass to be delivered through a feed line of which only the end part is shown indicated 3 in Figure 1. This feed line is also well known in the art and does not therefore need to be explained herein specifically.

Turning to the decoration of the products P, it has been stated that the decorations are usually in the form of lines of creamy material deposited on the products P in selected, predetermined paths. This is achieved by causing relative movement between the nozzle 2 and the product P while the creamy mass is delivered through the nozzle 2. The relative movement may be achieved either by holding the nozzle 2 stationary (usually in an array of several nozzles arranged, for example, in a row) and moving the product P, for example by the simple translational movement of a conveyor on which the products P are located, or by moving the nozzle or nozzles 2 (by means not specifically illustrated in the drawings) in a given path relative to the products P which are kept stationary. Naturally, it is also possible to combine a movement of the products P (for example a translational movement of the conveyor on which they are located) with a movement (for example zig-zag) of the nozzle or nozzles 2.

The core of the delivery apparatus 1 is a tube 4 which connects the output end 3 of the feed line to the delivery nozzle 2. One is concerned with a flexible-walled tube (which can thus be squashed) which extends in a substantially straight path of a given length.

This length is not in itself critical for the purposes of the invention. This length, together with the section of the tube 4 and the travel of the pressor element of which more will be said below, determines the volume of the mass to be delivered. In solutions which have been shown to be most advantageous up until now, the length of the tube 4 - with reference to the embodiment illustrated in Figure 1 - is of the order of 20-40cm.

Tests carried out by the Applicant have also shown that it is preferable, in use, for the tube 4 to be held vertically or substantially vertically (in the sense that displacements from the vertical even of a certain magnitude do not have an appreciably harmful effect on the operation of the apparatus).

The tube 4 extends immediately adjacent, preferably in at least marginal contact, with an abutment element 5 illustrated here in the form of a plate.

As will be more fully explained below, the function of the abutment plate 5 is essentially that of forming a plane against which the flexible tube 4 may be pressed. Consequently, any structure of rigid material (even a grid or perforated structure) is suitable for this purpose. The choice of the material from which the abutment element 5 is made is not critical as long as the required rigidity is ensured. However, in an embodiment which has been shown to be preferential, the abutment element 5 is made from a thermally conductive material (such as metal) and/or carries associated thermal-conditioning elements (heating and/or cooling) which are shown schematically in the form of an electrical heating resistor 6 powered through a respective thermostated unit 7.

Naturally, the use of a resistor as the heating element is not essential: equivalent means such as coils for the passage of diathermic fluids etc are clearly within the scope of an expert in the field, particularly when it is wished to achieve cooling instead of, or in addition to, heating.

On the opposite side of the flexible tube 4 from the abutment element 5 is a presser assembly 8 constituted (in the embodiment illustrated in Figure 1) by a chain 9 which passes over two wheels or pulleys 10, one of which is driven by a motor 11. The pulleys 10 are located one at the lower end and one at the upper end of the tube 4 so as to present an "active" pass 12 which extends along at least part of the length of the tube 4.

Rollers 13 are mounted on the chain 9, preferably equidistant from each other, and, when they are adjacent the active pass 12 of the chain 9, they act on the tube 4 to squash it against the abutment element 5.

With reference to the point of observation of Figure 1, the motor 11 drives the pulleys 10 to rotate in the anticlockwise sense, whereby the active pass 12 of the chain 9 and the rollers 13 thereon move downwardly.

The degree of squashing of the tube 4 (which, in the simplest embodiment, is constituted by a tube of elastomeric material, for example an elastomer which is compatible with contact with food products) may be adjusted by the selection of the radius of the rollers 13 and/or by varying selectively the position of the active pass 12 of the chain and possibly of the presser unit 8 as a whole relative to the tube 4 and the abutment element 5. The squashing of the tube 4 may thus be regulated selectively starting from a maximum value (in which the deformation induced in the wall of the tube 4 is such as to cause the complete closure of the duct within the tube itself) to a lesser value in which the duct within the tube 4 is reduced but not completely closed.

In each case, as a result of the rotation of the pulleys 10 and the consequent movement of the chain 9, each roller 13 periodically travels a downward path along and against the tube 4 with the consequent formation of a squashed zone at the upper end of the tube 4 (which is more or less marked as explained above). Still as a result of the downward movement of the active pass 12 of the chain 9, the zone of the tube 4 squashed by the roller 13 moves gradually towards the lower end of the tube 4 and is then annulled when the roller which is involved in the squashing at the time moves away from the tube 4 disengaging it as a result of its movement around the lower pulley 10.

The wall of the tube 4 is thus subjected to a deformation phenomenon which can be likened essentially to a sort of peristaltic movement.

Consequently the product (for example a cream) which is fed into the tube 4 through the line 3 is urged gradually towards its lower end, that is, towards the nozzle 2, until it is delivered through this nozzle.

The dynamics of this delivery and, in general, the dynamics of the descent of the delivered product through the tube 4, are rather complicated. As a result of the vertical, or substantially vertical, orientation of the tube 4, the product in question is subject to the force of gravity. In most cases, the force of gravity is not sufficient to cause the nett descent of the product through the tube 4. Usually the diametral dimensions of the tube 4 (generally no greater than 1-2 cm), depending on the degree of viscosity of the mass (it will be remembered that, in most cases, one is dealing with a creamy substance such as chocolate, cream or the like), in practice result in effects in the tube 4 very similar to capillarity. The same considerations naturally also apply to very fluid masses when the diameter of the tube 4 is correspondingly reduced. Briefly, the thrust exerted by the presser unit 8 on the mass in the tube 4 can thus be likened to the thrust which is achieved when a creamy mass is delivered from a tube such as a toothpaste tube or a tube of mayonnaise, which is squashed while the delivery aperture is held downwards.

The delivery of the product from the nozzle 2 is thus not achieved in a continuous manner but, generally speaking, in waves, with each wave corresponding to the descent of a roller 13 along the tube 4. The result of this is that it is possible to control the quantity of product delivered in each wave by varying the length of travel of each roller along the tube 4. A further metering action may also be achieved by increasing or reducing the magnitude of the squashing of the tube 4 achieved by the rollers 13. It will be noted, in particular, that the magnitude of this squashing is also correlated to the degree of pressure which it is possible to establish in the mass supplied to the nozzle 2.

The fact that delivery does not occur continuously lends itself ideally - as indicated previously - to its possible use for the decoration of products P. It is, in fact, possible to operate in such a manner that each delivery wave corresponds to the formation of the decoration on a respective product P. The pause between two successive waves - the duration of which can be adjusted selectively by varying the speed of the chain 9 and/or varying the distance between the rollers 13 on the chain 9 itself, may be used to move the delivery nozzle 2 to another product to perform the next decorating operation. As already indicated above, the fact that the abutment element 5 includes a heating/cooling element which extends along the entire length of the tube 4, or along an appreciable part thereof (thus in immediate proximity to, and in heat-exchange relationship with, the products being delivered, through the wall of the tube 4) has the advantage of enabling the temperature of the product delivered to be regulated precisely.

Figure 2 illustrates a possible embodiment of the delivery apparatus of the invention with reference to a structure which has been shown to be particularly advantageous for the delivery of aerated substances such as whipped cream or like creamy foodstuff, for example milk-based creams.

In Figure 2 the elements already described with reference to Figure 1 - or elements equivalent thereto - have been indicated by the same reference numbers as used previously.

The solution of -Figure 2 is used - for example - to supply a milk-based cream (substantially like whipped cream - hence an aerated foodstuff) into individual food products constituted by elongate wafer half-shells S which are generally boat-shaped with a length of the order of 5-6cm.

For this purpose the foodstuff in question is supplied simultaneously into a given number of individual products S, for example six products arranged in a row in a direction perpendicular to the plane of the drawings.

To this end a corresponding number of flexible tubes 4 (six tubes 4) is used, each of which supplies a corresponding nozzle 2 at its lower end. In the specific example shown in Figure 2, each nozzle 2 has a delivery aperture 2a constituted by a straight slit having a length of several centimetres and intended to be located above, and facing, a product S.

In the solution of Figure 2, the outlet end 3 of the feed line, as will be better understood below, has the structure of a manifold at which terminate a plurality (six, with reference to the embodiment illustrated in which there are six flexible tubes 4) of connector ducts 14 coming from a distributor 15 with an associated thermal-conditioning element (heater/cooler) 16 controlled by a thermostated unit 17.

The distributor 15 is in turn supplied through a pressure regulator 18 (of known type) to which the mass to be delivered is fed through a supply line 19 (terminating at a source not illustrated).

The pressure regulator 18 has a vent line 20 which opens into an exhaust space 21.

The function of the distributor 15 is essentially to distribute the mass to be delivered to the various tubes 4 as uniformly as possible so as to make the delivery conditions in which the various nozzles 2 operate exactly the same.

As best illustrated in Figure 3 (which is obviously of schematic character), the distributor 15 is usually constituted by a solid piece of thermally conductive material such as metal in which there are ducts or flow passages such as to give the distributor 15 the character of a static distributor of generally conic shape. The supply line indicated 22 from the pressure regulator 18 enters the distributor 15 at the vertex of this shape, usually at the top.

The supply line 22 branches into a plurality of distributor lines 23, the number of which corresponds to the number of connector ducts 14 (six in the embodiment illustrated) intended to supply the tubes 4 of the delivery apparatus 1.

As clearly visible in figure 3, the distributor lines 23 diverge from the supply line 22 along the generatrices of the conical shape of the distributor 15 so as to terminate each at one of the connector ducts 14.

The element 16 can thus be located in the body of the distributor 15 (as shown schematically in broken outline in Figure 3), in a central position equidistant from, and symmetrical with respect to, all the ducts 23 so as to act identically on all the lines of flow defined by these ducts.

By locating the distributor 15 in a position overlying, and centred on, the manifold 3 which is connected to the connector ducts 14 (preferably also made of plastics material, if necessary compatible with the handling of food materials and selected so as all to have the same length), it is possible to divide the substance to be delivered, which flows into the distributor 15 through the inlet line 22, into a given number of paths or branches (six in the embodiment illustrated) so as to flow on to the respective tubes 4. All these flows have exactly the same length of passage whatever the path or branch followed and thus the flows passing through the manifold 3 and reaching the upper ends of the tubes 4 have exactly the same flow rate and pressure in all the paths or branches of the distributor. This fact, together with the manner in which the tubes 4 are squashed, ensures that the delivery conditions for the various nozzles 2 are exactly the same as for all the other nozzles.

The solution shown in Figure 2 also provides for the use of rollers 13 to squash the flexible tubes 4.

In the solution of Figure 2, the manner in which the rollers 13 are driven differs slightly from that shown in Figure 1.

It goes without saying that, at least in principle, the structure of the presser unit 8 explained previously with reference to Figure 1, may be used in the arrangement of Figure 2 and vice versa.

Essentially the solution referred to in Figure 2 provides for the use of at least one roller 13 which can press not just one tube 4 but, in general, a plurality of tubes 4 (hence two or more) placed side by side. Naturally it is understood that this solution, although preferred, is not essential. It is in fact possible to provide as many presser units as there are tubes even if several tubes 4 are located side by side.

The axis of the roller 13 thus extends transverse the length, which is substantially vertical, of the adjacent tubes 4 and is supported at one end of its axis of rotation (or possibly at both ends if this is preferred for reasons of stability) by the shaft 28 of an actuator 29 which extends generally alongside the tubes 4. In the embodiment illustrated, the actuator 29 is mounted on the same side of the tubes 4 as the abutment element 5. Naturally it would also be possible to use a complementary arrangement with the actuator 29 located on the same side (opposite that of the abutment element 5) as the roller 13.

The function of the actuator 29 is essentially that of moving the roller between a position in which it is effectively disengaged from the tube 4 (for example a position of marginal contact in which the roller 13 does not exert any appreciable pressure on the wall of the tube 4, as illustrated in full outline in Figure 2) and a squashing position in which the roller 13 compresses the wall of the tube 4, deforming it in the sense of squashing it (as illustrated in broken outline in the same Figure 2).

As already explained in full with reference to the embodiment of Figure 1, the degree of squashing of the wall of the tube 4 may be adjusted selectively, for example by varying the travel of the shaft 28 of the actuator 29 correspondingly or, in general, by varying the assembly position of the actuator 29 relative to the tube 4 or, yet again - if wished - by replacing the roller 13 by a roller of a different diameter.

As shown schematically in the drawing, the actuator 29 is mounted on a structure 30 which extends alongside the tubes 4. More specifically, the actuator 29 is mounted so as to be slidable on vertical guides 31 carried by the structure 30 and is acted upon by a further actuator 32 which extends vertically and acts between the structure 30 and the actuator 29 to make this slide vertically on the guides 31.

Supposing that one starts from the position illustrated in full outline in Figure 2, in which the actuator 29 is at the upper end of the guide 31 (actuator 32 with shaft 32a retracted), it is possible (under the control of a control device not illustrated and of known type such as a PLC) to drive a cyclic operative sequence which includes the following steps:
- return of the shaft 28 into the actuator 29 sufficiently to bring the roller 13 into a position in which it squashes the tube 4 (position illustrated in broken outline in Figure 2),
- activation of the actuator 32 with corresponding extension of the shaft 32a out of the actuator 32 itself and descent of the actuator 29 along the guides 31 until it reaches the position illustrated in chain line in Figure 2; this downward movement corresponds to the translational movement of the roller 13, which keeps the wall of the tube 4 squashed, with the consequent delivery of the mass flowing through the tube 4 in a manner wholly similar to that described previously with reference to the embodiment of Figure 1.
- stoppage of the movement of the actuator 29 along the guides 31 at a lower position predetermined selectively in accordance with the quantity of substance to be delivered through the nozzles 2, as shown schematically in chain line in Figure 2,
- activation of the actuator 29 in the sense which causes the extension of the shaft 28 and consequent movement of the roller 13 into its position of disengagement (absence of squashing) from the tube 4, as shown schematically in the double-dotted chain line in Figure 3, and
- further activation of the actuator 32 in the sense of returning the shaft 32a into the actuator 32 itself, with the resulting return of the actuator 29 and of the roller 13 carried thereby to the starting position illustrated in full outline in Figure 2.

The cyclic repetition of the sequence of steps described above causes the foodstuff to be delivered from the line 19 through the nozzles 2 into the products S in "waves", that is to say, in a manner substantially similar to that described previously with reference to the embodiment of Figure 1.

In the embodiment of figure 2, there is the further possibility of making use of a roller and actuator mechanism for fulfilling a function which can be likened essentially to that of a valve or tap which further controls the delivery through the nozzles 2 so as to avoid any undesirable dropping of substance from the nozzles 2 themselves.

Specifically, in the embodiment illustrated, a further actuator 33 is mounted on the structure 30 beneath the lower end of the guides 31, and thus adjacent the lower ends of the flexible tubes 4, the shaft 33a of this actuator extending horizontally. The shaft of the actuator 33 carries a further roller 34 at its free end in a manner substantially similar to that adopted for the mounting of the roller 13 on the shaft 28 of the actuator 29, this further roller 34 being able to squash the lower end or ends of the tubes 4.

The roller 34 differs from the roller 13 in that, whereas the latter can move horizontally into its position in which it squashes the tubes 4 and also vertically as a result of the vertical movement of the actuator 29 along the guides 31 to effect delivery, the roller 34 moves solely horizontally. More precisely, the roller 34 is moved - as a result of the activation of the actuator 33 - between the position illustrated in full outline in Figure 2, in which the roller 34 is disengaged from the tube 4 or bears on its lower end without squashing it, and the position illustrated in broken outline in the same drawing in which, as a result of the return of the shaft 33a into the actuator 33, the roller 34 is moved into a position in which it squashes the tube 4 - generally completely or nearly completely - with the resulting closure of the passage therethrough.

The movement of the roller 34 into the squashing position - hence closure - of the tube 4 is controlled by the PLC which controls the activation of the actuators 29 and 32 in a manner coordinated with the downward travel of the roller 13 which squashes the tube 4 and causes the delivery of the foodstuff through the nozzle 2. More particularly, when the roller 13 descends so as to cause the delivery through the nozzles 2, the roller 34 is kept in its position in which it is disengaged from the tube 4 and is then moved into its engaged, squashing position when the delivery travel of the roller 13 has been completed and the roller 13 itself has been moved away from the tube 4 and back up to its starting position. In these conditions, the roller 34 squashes the tube 4 and, more particularly, its lower end so as to close the passage through it and thus prevent undesirable quantities, however small, of the foodstuff which flows through the tube 4 from being delivered through the nozzle 2. This solution (or the provision of equivalent tap-means at the lower end of the tube 4) is a preferred choice when the substance to be delivered through the tubes 4 is rather fluid and thus able to fall through the tubes 4 even when not urged by the roller 13. Naturally, the principle of the invention remaining the same, the constructional details and forms of embodiment may be varied widely with respect to those described and illustrated without thereby departing from the scope of the present invention as defined by the annexed claims. This is true particularly with regard to the structure of the presser unit 8. Even though in both solutions described with reference to Figures 1 and 2, the unit is based on the use of profiled bodies constituted by rollers, it is naturally understood that the invention can be carried out with technically equivalent solutions in which the element which can press on the flexible tube 4 and subsequently move the compressed zone along the tube 4 itself may be constituted by squashing means of a different nature, such as a sliding block or a cursor.

## Claims

1. Apparatus for the controlled delivery of a product, comprising:
a tube (4), which is flexible in the sense that it can be squashed, extending in a substantially straight path and able, in use, to receive (3) a substance to be delivered and
a presser unit (8) including squashing means (13) which can cooperate with the tube (4) to squash a given zone of the tube (4) with subsequent movement of the squashed zone along the length of the tube (4); the movement of the squashed zone causing the expulsion of the product from the tube (4), in use, with consequent delivery thereof,
**characterised**
**in that** it includes a plurality of said tubes (4) as well as a distributor element (15) for feeding the product to be delivered into the said plurality of tubes (4) in a uniform manner, and
**in that** the distributor element (15) includes an inlet duct (22) and a plurality of distributor ducts (23) which branch from the inlet duct (22) in a generally conical arrangement towards their outlet ends which have associated connector ducts (14) for supplying the product to the said tubes (4).

2. Apparatus according to Claim 1, **characterised in that** the tubes (4) are oriented substantially vertically.

3. Apparatus according to Claim 1 or Claim 2, **characterised in that** the tubes (4) are made from a plastics material which is compatible with contact with food substances.

4. Apparatus according to Claim 2, **characterised in that** each tube (4) carries an associated delivery nozzle (2) for the product at its lower end in use.

5. Apparatus according to any one of the preceding claims, **characterised in that** it includes an abutment element (5) substantially coextensive with the tubes (4) and against which the tubes (4) are pressed by the presser unit (8).

6. Apparatus according to Claim 5, **characterised in that** the abutment element (5) carries associated thermal-conditioning means (6).

7. Apparatus according to Claim 5 or Claim 6, **characterised in that** the abutment element (5) is made from a material with a high thermal conductivity.

8. Apparatus according to Claim 7, **characterised in that** the abutment element (5) is of metal.

9. Apparatus according to any. one of the preceding claims, **characterised in that** the presser unit (8) includes at least one profiled body (13) with associated drive means (9, 10, 11) which can drive the profiled body (13) to effect a movement comprising:
- the approach of the profiled body (13) to the tubes (4) with consequent squashing of the tubes (4),
- the translational movement of the profiled body (13), maintained in a position in which it squashes the tubes (4), along the length of the tubes (4) itself, and
- on completion of this translational movement, the further movement of the profiled body (13) away from the tubes (4) which are thus freed from squashing.

10. Apparatus according to Claim 9, **characterised in that** the presser unit (8) includes a plurality of profiled bodies (13) each of which can cooperate with one of the tubes (4) to squash it and effect the subsequent translational movement of the squashed zone along the length of the tube (4).

11. Apparatus according to Claim 9 or Claim 10, **characterised in that** the at least one profiled body is constituted by a roller (13).

12. Apparatus according to any one of Claims 9 to 11, **characterised in that** the at least one profiled body is mounted on a motor-driven endless chain structure (9), the motor-driven (10, 11) chain (9) including an active pass (12) substantially coextensive with the tubes (4).

13. Apparatus according to Claim 5 and Claim 12, **characterised in that** the abutment element (5) and the said pass (12) of the motor-driven (10, 11) chain (9) lie on opposite sides of the tubes (4).

14. Apparatus according to Claim 9, **characterised in that** it includes an actuator element (29) having a shaft (28) which carries the at least one profiled body (13), the activation of the actuator (29) causing the movement of the profiled body (13) into the position in which it squashes the tubes (4).

15. Apparatus according to Claim 14, **characterised in that** it includes a support structure (30) for the actuator element (29) with guide formations (31) for enabling the actuator element (29) to move in the general direction of extent of the tubes (4), the movement of the actuator element (29) along the guide formations (31) causing the translational movement of the squashed zone of the tubes (4).

16. Apparatus according to Claim 15, **characterised in that** the actuator element has associated drive means (32) for driving the movement of the actuator element (29) along the guide formations (31).

17. Apparatus according to Claim 16, **characterised in that** the drive means comprise an actuator (32).

18. Apparatus according to Claim 5 and any one of Claims 14 to 17, **characterised in that** the abutment element (5) and the actuator element (29) are located on the same side of the tubes (4).

19. Apparatus according to any one of the preceding claims, **characterised in that** valve means (34) are associated with the lower end of the tubes (4) in use, the valve means being operable (33) selectively to close the internal passage through the tubes (4).

20. Apparatus according to Claim 19, **characterised in that** the valve means comprise a further profiled body (34) movable between a rest position, in which the further profiled body (34) does not interfere with the passage through the tubes (4), which is thus completely open, and an active position in which the profiled body (34) acts on the tubes (4) to squash them and reduce their through-passage.

21. Apparatus according to Claim 20, **characterised in that** the further profiled body is constituted by a roller (34).

22. Apparatus according to Claim 5 and any one of Claims 20 or 21, **characterised in that** the further profiled body (34) is adapted to act by squashing the tubes (4) against the abutment element (5).

23. Apparatus according to any one of Claims 20 to 22, **characterised in that** it includes a further actuator element (33) having a shaft (33a) on which the further profiled body (34) is mounted.

24. Apparatus according to Claim 22 and Claim 23, **characterised in that** the further actuator element (33) and the abutment element (5) are located on the same side of the tubes (4).

25. Apparatus according to Claim 1, **characterised in that** the distributor ducts (23) and the connector ducts (14) define flow paths for the product which are of substantially the same length as each other.

26. Apparatus according to any of Claims 1 or 25, **characterised in that** the distributor element (15) has associated thermal-conditioning means (16).

27. Apparatus according to Claim 26, **characterised in that** the distributor element (15) is made of thermally-conductive material.

28. Apparatus according to any of Claims 1 or 25 to 27, **characterised in that** it includes a pressure regulator (18) located upstream of the distributor element (15) for supplying the substance to be delivered at a predetermined pressure.

## Patentansprüche

1. Vorrichtung zur kontrollierten Abgabe eines Produkts mit:
einem Rohr (4), welches flexibel in dem Sinne ist, dass es gequetscht werden kann, und welches sich im Wesentlichen gerade erstreckt und im Gebrauch eine abzugebende Substanz aufnehmen (3) kann, und
einer Druckeinheit (8) mit Quetschmitteln (13), welche mit dem Rohr (4) zusammenwirken können, um eine gegebene Zone des Rohrs (4) zu zerquetschen mit einer anschließenden Bewegung der gequetschten Zone entlang der Länge des Rohrs (4), wobei die Bewegung der gequetschten Zone das Ausstoßen des Produkts aus dem Rohr (4) verursacht, während des Gebrauchs, mit der nachfolgenden Abgabe des Produkts,
**dadurch gekennzeichnet, dass**
die Vorrichtung mehrere Rohre (4) beinhaltet sowie ein Verteilerelement (15) zum Zuführen des abzugebenden Produkts in die mehreren Rohre (4) in gleichmäßiger Art und Weise, und
das Verteilerelement (15) eine Einlassleitung (22) und mehrere Verteilerleitungen (23) beinhaltet, welche sich von der Einlassleitung (22) in einer im Wesentlichen konischen Ausgestaltung in Richtung ihrer Auslassenden verzweigen, welche zugeordnete Verbindungsleitungen (14) zum Zuführen des Produkts zu den Rohren (4) haben.

2. Vorrichtung nach Anspruch 1, **dadurch gekennzeichnet, dass** die Rohre (4) im Wesentlichen vertikal orientiert sind.

3. Vorrichtung nach Anspruch 1 oder 2, **dadurch gekennzeichnet**, das die Rohre (4) aus einem Plastikmaterial bestehen, welches geeignet für einen Kontakt mit Lebensmitteln ist.

4. Vorrichtung nach Anspruch 2, **dadurch gekennzeichnet, dass** jedes Rohr (4) eine zugehörige Abgabedüse (2) für das Produkt im Gebrauch an seinem unteren Ende aufweist.

5. Vorrichtung nach einem der vorangehenden Ansprüche, **dadurch gekennzeichnet, dass** sie ein Anschlagelement (5) beinhaltet, welches sich im Wesentlichen zusammen mit den Rohren (4) erstreckt und gegen welches die Rohre (4) durch die Druckeinheit (8) gepresst werden.

6. Vorrichtung nach Anspruch 5, **dadurch gekennzeichnet, dass** das Anschlagelement (5) zugehörige Temperatur-Einstellmittel (6) aufweist.

7. Vorrichtung nach Anspruch 5 oder 6, **dadurch gekennzeichnet, dass** das Anschlagelement (5) aus einem Material mit einer hohen thermischen Leitfähigkeit besteht.

8. Vorrichtung nach Anspruch 7, **dadurch gekennzeichnet, dass** das Anschlagelement (5) aus Metall besteht.

9. Vorrichtung nach einem der vorangehenden Ansprüche, **dadurch gekennzeichnet, dass** die Druckeinheit (8) zumindest einen profilierten Körper (13) mit zugehörigen Antriebsmitteln (9, 10, 11) beinhaltet, welche den profilierten Körper (13) antreiben können, so dass er eine Bewegung ausführt, die folgendes beinhaltet:
- die Annäherung des profilierten Körpers (13) an die Rohre (4) mit einem anschließenden Quetschen der Rohre (4),
- die translatorische Bewegung des profilierten Körpers (13), gehalten in einer Position, in welcher er die Rohre (4) quetscht, entlang der Länge der Rohre (4), und
- nach Vollendung dieser translatorischen Bewegung, die weitere Bewegung des profilierten Körpers (13) weg von den Rohren (4), welche dann frei von der Quetschung sind.

10. Vorrichtung nach Anspruch 9, **dadurch gekennzeichnet, dass** die Druckeinheit (8) mehrere profilierte Körper (13) beinhaltet, von denen jeder mit einem der Rohre (4) zusammenwirken kann, um es zu quetschen und die nachfolgende translatorische Bewegung der gequetschten Zone entlang der Länge des Rohrs (4) zu bewirken.

11. Vorrichtung nach Anspruch 9 oder 10, **dadurch gekennzeichnet, dass** der zumindest eine profilierte Körper durch eine Rolle (13) gebildet wird.

12. Vorrichtung nach einem der Ansprüche 9 bis 11, **dadurch gekennzeichnet, dass** der zumindest eine profilierte Körper an einer motorgetriebenen endlosen Kettenstruktur (9) angebracht ist, wobei die motorgetriebene (10, 11) Kette (9) einen aktiven Trum (12) beinhaltet, welcher sich im Wesentlichen mit den Rohren (4) zusammen erstreckt.

13. Vorrichtung nach Anspruch 5 und 12, **dadurch gekennzeichnet, dass** das Anschlagelement (5) und der Trum (12) der motorgetriebenen (10, 11) Kette (9) sich auf gegenüberliegenden Seiten der Rohre (4) befinden.

14. Vorrichtung nach Anspruch 9, **dadurch gekennzeichnet, dass** sie ein Aktorelement (29) beinhaltet, welches eine Welle (28) aufweist, welche den zumindest einen profilierten Körper (13) trägt, wobei die Betätigung des Aktors (29) die Bewegung des profilierten Körpers (13) in diejenige Position bewirkt, in welcher er die Rohre (4) quetscht.

15. Vorrichtung nach Anspruch 14, **dadurch gekennzeichnet, dass** sie eine Lagerstruktur (30) für das Aktorelement (29) mit Führungsausformungen (31) beinhaltet, um zu ermöglichen, dass sich das Aktorelement (29) in der allgemeinen Richtung der Erstreckung der Rohre (4) bewegt, wobei die Bewegung des Aktorelements (29) entlang der Führungsausformungen (31) die translatorische Bewegung der gequetschten Zone der Rohre (4) bewirkt.

16. Vorrichtung nach Anspruch 15, **dadurch gekennzeichnet, dass** das Aktorelement zugehörige Antriebsmittel (32) zum Antreiben der Bewegung des Aktorelements (29) entlang der Führungsausformungen (31) aufweist.

17. Vorrichtung nach Anspruch 16, **dadurch gekennzeichnet, dass** die Antriebsmittel einen Aktor (32) aufweisen.

18. Vorrichtung nach Anspruch 5 und einem der Ansprüche 14 bis 17, **dadurch gekennzeichnet, dass** das Anschlagelement (5) und das Aktorelement (29) auf der gleichen Seite der Rohre (4) angeordnet sind.

19. Vorrichtung nach einem der vorangehenden Ansprüche, **dadurch gekennzeichnet, dass** Ventilmittel (34) dem unteren Ende der Rohre (4) im Gebrauch zugeordnet sind, wobei die Ventilmittel selektiv betätigbar (33) sind, um den internen Durchgang durch die Rohre (4) hindurch zu schließen.

20. Vorrichtung nach Anspruch 19, **dadurch gekennzeichnet, dass** die Ventilmittel einen weiteren profilierten Körper (34) aufweisen, welcher zwischen einer Ruheposition, in welcher der weitere profilierte Körper (34) nicht mit dem Durchgang durch die Rohre (4) in Wechselwirkung steht, welcher daher vollständig geöffnet ist, und einer aktiven Position bewegbar ist, in welcher der profilierte Körper (34) auf die Rohre (4) einwirkt, um diese zu quetschen und den Durchgang durch die Rohre (4) hindurch zu reduzieren.

21. Vorrichtung nach Anspruch 20, **dadurch gekennzeichnet, dass** der weitere profilierte Körper durch eine Rolle (34) gebildet wird.

22. Vorrichtung nach Anspruch 5 und einem der Ansprüche 20 oder 21, **dadurch gekennzeichnet, dass** der weitere profilierte Körper (34) so ausgestaltet ist, dass er durch Quetschen der Rohre (4) gegen das Anschlagelement (5) wirkt.

23. Vorrichtung nach einem der Ansprüche 20 bis 22, **dadurch gekennzeichnet, dass** sie ein weiteres Aktorelement (33) beinhaltet, welches eine Welle (33a) aufweist, an welcher der weitere profilierte Körper (34) angebracht ist.

24. Vorrichtung nach Anspruch 22 und 23, **dadurch gekennzeichnet, dass** das weitere Aktorelement (33) und das Anschlagelement (5) auf der gleichen Seite der Rohre (4) vorgesehen sind.

25. Vorrichtung nach Anspruch 1, **dadurch gekennzeichnet, dass** die Verteilerleitungen (23) und die Verbindungsleitungen (14) Durchflusspfade für das Produkt definieren, welche im Wesentlichen die gleiche Länge haben.

26. Vorrichtung nach einem der Ansprüche 1 oder 25, **dadurch gekennzeichnet, dass** das Verteilerelement (15) zugehörige Temperatureinstellmittel (16) hat.

27. Vorrichtung nach Anspruch 26, **dadurch gekennzeichnet, dass** das Verteilerelement (15) aus thermisch leitfähigem Material besteht.

28. Vorrichtung nach einem der Ansprüche 1 oder 25 bis 27, **dadurch gekennzeichnet, dass** sie einen Druckregler (18) beinhaltet, welcher stromaufwärts des Verteilerelements (15) vorgesehen ist, um die auszugebende Substanz bei einem vorbestimmten Druck zu liefern.

## Revendications

1. Appareil pour la décharge contrôlée d'un produit, comprenant :
un tube (4), qui est flexible en ce sens qu'il peut être comprimé, s'étendant en une trajectoire sensiblement droite et adapté, à l'utilisation, à recevoir (3) une substance à décharger et
une unité de pression (8) comprenant un moyen de compression (13) qui peut coopérer avec le tube (4) pour comprimer une zone donnée du tube (4) avec un déplacement ultérieur de la zone comprimée le long du tube (4) ; le déplacement de la zone comprimée provoquant l'expulsion du produit du tube (4), à l'utilisation, avec sa décharge résultante,
**caractérisé**
**en ce qu'**il comprend une pluralité desdits tubes (4) ainsi qu'un élément distributeur (15) pour distribuer le produit à décharger dans ladite pluralité de tubes (4) de manière uniforme, et
**en ce que** l'élément distributeur (15) comprend un conduit d'entrée (22) et une pluralité de conduits distributeurs (23) qui se ramifient depuis le conduit d'entrée (22) en un agencement généralement conique vers leurs extrémités de sortie qui comportent des conduits de raccordement associés (14) pour distribuer le produit auxdits tubes (4).

2. Appareil selon la revendication 1, **caractérisé en ce que** les tubes (4) sont orientés sensiblement verticalement.

3. Appareil selon la revendication 1 ou la revendication 2, **caractérisé en ce que** les tubes (4) sont faits d'une matière plastique qui est adaptée à un contact avec des substances alimentaires.

4. Appareil selon la revendication 2, **caractérisé en ce que** chaque tube (4) porte une buse de décharge associée (2) pour le produit à son extrémité inférieure à l'utilisation.

5. Appareil selon l'une quelconque des revendications précédentes, **caractérisé en ce qu'**il comprend un élément de butée (5) sensiblement dans l'extension des tubes (4) et contre lequel les tubes (4) sont pressés par l'unité de pression (8).

6. Appareil selon la revendication 5, **caractérisé en ce que** l'élément de butée (5) porte un moyen de conditionnement thermique associé (6).

7. Appareil selon la revendication 5 ou la revendication 6, **caractérisé en ce que** l'élément de butée (5) est fait d'un matériau à forte conductivité thermique.

8. Appareil selon la revendication 7, **caractérisé en ce que** l'élément de butée (5) est en métal.

9. Appareil selon l'une quelconque des revendications précédentes, **caractérisé en ce que** l'unité de pression (8) comprend au moins un corps profilé (13) avec un moyen d'entraînement associé (9, 10, 11) qui peut entraîner le corps profilé (13) pour effectuer un déplacement comprenant :
- le rapprochement du corps profilé (13) des tubes (4) avec une compression résultante des tubes (4),
- le mouvement de translation du corps profilé (13), maintenu dans une position dans laquelle il comprime les tubes (4), le long des tubes (4) mêmes, et
- une fois le mouvement de translation terminé, le déplacement ultérieur du corps profilé (13) loin des tubes (4) qui sont donc libérés de la compression.

10. Appareil selon la revendication 9, **caractérisé en ce que** l'unité de pression (8) comprend une pluralité de corps profilés (13), chacun pouvant coopérer avec l'un des tubes (4) pour le comprimer et effectuer le mouvement de translation ultérieur de la zone comprimée le long du tube (4).

11. Appareil selon la revendication 9 ou la revendication 10, **caractérisé en ce que** ledit au moins un corps profilé est constitué par un galet (13).

12. Appareil selon l'une quelconque des revendications 9 à 11, **caractérisé en ce que** ledit au moins un corps profilé est monté sur une structure de chaîne sans fin entraînée par moteur (9), la chaîne (9) entraînée par moteur (10, 11) comprenant un brin actif (12) sensiblement dans l'extension des tubes (4).

13. Appareil selon la revendication 5 et la revendication 12, **caractérisé en ce que** l'élément de butée (5) et ledit brin (12) de la chaîne (9) entraînée par moteur (10, 11) se situent sur des côtés opposés des tubes (4).

14. Appareil selon la revendication 9, **caractérisé en ce qu'**il comprend un élément actionneur (29) comportant un arbre (28) qui porte ledit au moins un corps profilé (13), l'actionnement de l'actionneur (29) provoquant le déplacement du corps profilé (13) dans la position dans laquelle il comprime les tubes (4).

15. Appareil selon la revendication 14, **caractérisé en ce qu'**il comprend une structure de support (30) pour l'élément actionneur (29) avec des guides (31) pour permettre à l'élément actionneur (29) de se déplacer dans la direction générale d'extension des tubes (4), le déplacement de l'élément actionneur (29) le long des guides (31) provoquant le mouvement de translation de la zone comprimée des tubes (4).

16. Appareil selon la revendication 15, **caractérisé en ce que** l'élément actionneur comporte un moyen d'entraînement associé (32) pour entraîner le déplacement de l'élément actionneur (29) le long des guides (31).

17. Appareil selon la revendication 16, **caractérisé en ce que** le moyen d'entraînement comprend un actionneur (32).

18. Appareil selon la revendication 5 et l'une quelconque des revendications 14 à 17, **caractérisé en ce que** l'élément de butée (5) et l'élément actionneur (29) sont situés sur le même côté des tubes (4).

19. Appareil selon l'une quelconque des revendications précédentes, **caractérisé en ce qu'**un moyen de vanne (34) est associé à l'extrémité inférieure des tubes (4) à l'utilisation, le moyen de vanne étant adapté à être actionné (33) sélectivement pour fermer le passage interne dans les tubes (4).

20. Appareil selon la revendication 19, **caractérisé en ce que** le moyen de vanne comprend un corps profilé supplémentaire (34) adapté à un déplacement entre une position de repos, dans laquelle le corps profilé supplémentaire (34) ne gêne pas le passage dans les tubes (4), qui est alors complètement ouvert, et une position active dans laquelle le corps profilé (34) agit sur les tubes (4) pour les comprimer et diminuer leur passage traversant.

21. Appareil selon la revendication 20, **caractérisé en ce que** le corps profilé supplémentaire est constitué par un galet (34).

22. Appareil selon la revendication 5 et l'une quelconque des revendications 20 ou 21, **caractérisé en ce que** le corps profilé supplémentaire (34) est adapté à agir en comprimant les tubes (4) contre l'élément de butée (5).

23. Appareil selon l'une quelconque des revendications 20 à 22, **caractérisé en ce qu'**il comprend un élément actionneur supplémentaire (33) comportant un arbre (33a) sur lequel le corps profilé supplémentaire (34) est monté.

24. Appareil selon la revendication 22 ou la revendication 23, **caractérisé en ce que** l'élément actionneur supplémentaire (33) et l'élément de butée (5) sont situés sur le même côté des tubes (4).

25. Appareil selon la revendication 1, **caractérisé en ce que** les conduits distributeurs (23) et les conduits de raccordement (14) définissent des passages d'écoulement pour le produit qui ont sensiblement la même longueur.

26. Appareil selon l'une quelconque des revendications 1 ou 25, **caractérisé en ce que** l'élément distributeur (15) comporte un moyen de conditionnement thermique associé (16).

27. Appareil selon la revendication 26, **caractérisé en ce que** l'élément distributeur (15) est fait d'un matériau conduisant la chaleur.

28. Appareil selon l'une quelconque des revendications 1 ou 25 à 27, **caractérisé en ce qu'**il comprend un régulateur de pression (18) situé en amont de l'élément distributeur (15) pour distribuer la substance à décharger à une pression prédéterminée.
